Europäisches Patentamt

European Patent Office

Office européen des brevets

(19)

(11) Numéro de publication: **0 138 698**
**B1**

(12) **FASCICULE DE BREVET EUROPEEN**

(45) Date de publication du fascicule du brevet:
**01.06.88**

(21) Numéro de dépôt: **84402005.7**

(22) Date de dépôt: **05.10.84**

(51) Int. Cl.⁴: **H 04 B 9/00,** H 04 J 15/00,
G 02 B 6/28

(54) **Multiplexeur-démultiplexeur optique de longueurs d'onde pour liaison bidirectionnelle.**

(30) Priorité: **11.10.83 FR 8316138**

(43) Date de publication de la demande:
**24.04.85 Bulletin 85/17**

(45) Mention de la délivrance du brevet:
**01.06.88 Bulletin 88/22**

(84) Etats contractants désignés:
**BE CH DE GB IT LI NL**

(73) Titulaire: **ALCATEL CIT, 33, rue Emeriau, F-75015 Paris (FR)**

(72) Inventeur: **Gouali, Mohamed, THOMSON-CSF SCPI 173, bld Haussmann, F-75379 Paris Cedex 08 (FR)**
Inventeur: **Roullet, Gérald, THOMSON-CSF SCPI 173, bld Haussmann, F-75379 Paris Cedex 08 (FR)**
Inventeur: **Voisin, Olivier, THOMSON-CSF SCPI 173, bld Haussmann, F-75379 Paris Cedex 08 (FR)**

(74) Mandataire: **Weinmiller, Jürgen et al, Lennéstrasse 9 Postfach 24, D-8133 Feldafing (DE)**

(56) Documents cités:
EP - A - 0 071 309
FR - A - 2 454 634
FR - A - 2 499 723

CONFERENCE EUROPEENNE SUR LES COMMUNICATIONS OPTIQUES, 21-24 septembre 1982, pages 532-536, Cannes, FR; E. PELLETIER et al.: "Filtres optiques interférentiels pour multiplexeurs et démultiplexeurs destinés aux communications par fibres"

(56) Documents cités: (suite)
CONFERENCE EUROPEENNE SUR LES COMMUNICATIONS OPTIQUES, 21-24 septembre 1982, pages 305-314, Cannes, FR; G. WINZER: "Multiplexage de longueurs d'ondes - Situation et tendances"
SIEMENS FORSCHUNGS- UND ENTWICKLUNGSBERICHTE, vol. 8, no. 3, 1979, pages 125-129, Springer-Verlag; D. ROSENBERGER: "Microoptic passive devices for multimode optical fiber communication systems"

## Description

La présente invention concerne un multiplexeur-démultiplexeur optique bidirectionnel de longueurs d'onde.

Dans les systèmes de transmissions optiques, il est nécessaire de multiplexer dans une seule fibre optique principale dite de liaison ou de transmission des signaux de différentes longueurs d'onde modulées chacune par les informations à transmettre, et inversement. De tels systèmes optiques sont dits unidirectionnels ou monodirectionnels lorsque les différentes longueurs d'onde se propagent dans un seul sens de la fibre de liaison, et sont dits bidirectionnels lorsque la fibre de liaison transmet dans un sens différentes longueurs d'onde dites d'aller et dans l'autre sens une ou plusieurs autres longueurs d'onde dites de retour. A l'heure actuelle, les systèmes de liaisons optiques bidirectionnelles sont utilisés dans de nombreux domaines tels que par exemple la télématique, les transmissions téléphoniques ou les réseaux de télédistribution dans lesquels une station centrale communique avec des stations périphériques constituées par des appareils d'émission-réception d'abonnés.

On connaît déjà différents types de multiplexeur-démultiplexeur optique de voies ou canaux de transmission de longueurs d'onde sur une seule fibre de liaison bidirectionnelle. L'un d'entre eux, (CONFÉRENCE EUROPÉENNE SUR LES COMMUNICATIONS OPTIQUES, 21–24 septembre 1982, pages 532–536, Cannes, FR; E. PELLETIER et al.: «Filtres optiques interférentiels pour multiplexeurs et démultiplexeurs destinés aux communications par fibres»), pour une liaison bidirectionnelle par exemple à trois canaux dont deux d'aller et un de retour, est constitué de deux filtres interférentiels à multicouches diélectriques placés respectivement en regard des deux extrémités de la fibre de liaison. Chacun des deux filtres remplit une double fonction, à savoir pour l'un, le multiplexage proprement dit des deux canaux d'aller par répartition en longueur d'onde et l'extraction du canal de retour, et pour l'autre filtre, le démultiplexage proprement dit des deux canaux d'aller par sélection après propagation dans la fibre et la transmission du canal de retour dans la fibre.

Toutefois, un tel dispositif de multiplexage-démultiplexage optique bidirectionnel présente des inconvénients. En effet, le fait que l'extraction du canal retour soit assurée par le même filtre interférentiel de multiplexage des deux canaux aller, et de même en ce qui concerne la transmission du canal retour par le même filtre interférentiel de démultiplexage des deux canaux aller, provoque une importante réjection du canal retour sur chacun des canaux aller, et donc augmente la diaphonie. Par conséquent, chacun des filtres remplissant une double fonction ne peut séparer correctement le canal retour des canaux aller, ce qui est particulièrement gênant au point de vue restitution des différentes informations. De plus, ce dispositif n'est pas réalisé sous une forme compacte, c'est-à-dire à faible encombrement.

La présente invention a pour but de remédier à ces inconvénients en proposant un multiplexeur-démultiplexeur optique pour une liaison bidirectionnelle, qui permet de diminuer notablement la diaphonie, et qui se présente sous une forme compacte, c'est-à-dire à faible encombrement.

Ainsi, pour une liaison bidirectionnelle, c'est-à-dire pour une seule fibre de liaison transmettant dans un sens au moins deux longueurs d'onde dites d'aller et dans l'autre sens au moins une longueur d'onde dite de retour, l'invention a pour objet un multiplexeur-démultiplexeur comportant des moyens optiques filtrants de multiplexage-démultiplexage des longueurs d'onde d'aller et une lentille autofocalisatrice en matériau réfringent à gradient d'indice disposée entre les moyens filtrants et la fibre de liaison, la lentille ayant une longueur telle que l'écart spatial entre le faisceau lumineux aux longueurs d'onde d'aller et celui à la longueur d'onde de retour soit maximal.

On comprend qu'ainsi la lentille autofocalisatrice à gradient d'indice, par un choix approprié de sa longueur et par ses propriétés physiques intrinsèques, permettra de séparer ou découpler au maximum la longueur d'onde de retour des longueurs d'onde d'aller tant du côté multiplexage que du côté démultiplexage, et ceci sans aucune intervention des moyens filtrants sur la longueur d'onde de retour, ce qui conférera au multiplexeur-démultiplexeur d'excellentes performances globales (perte d'insertion et diaphonie minimales). Par conséquent, les moyens filtrants ne rempliront plus désormais chacun qu'une seule fonction au lieu de deux comme dans l'art antérieur, à savoir le multiplexage ou le démultiplexage proprement dit des longueurs d'onde d'aller, tandis que les fonctions d'extraction de la longueur d'onde de retour côté multiplexage et de transmission de celle-ci côté démultiplexage seront remplies par un même autre moyen intermédiaire, à savoir la lentille autofocalisatrice.

D'autres caractéristiques et avantages de l'invention apparaîtront mieux dans la description détaillée qui suit et se réfère aux dessins annexés donnés uniquement à titre d'exemple et dans lesquels:

— la figure 1 représente un schéma général d'un multiplexage-démultiplexage pour une liaison bidirectionnelle par fibre optique;

— les figures 2 et 3 représentent respectivement des vues en coupe longitudinale du multiplexeur et du démultiplexeur associé selon l'invention, pour une liaison bidirectionnelle à trois canaux dont deux d'aller et un de retour;

— les figures 4a, 4b et 5 représentent des variantes de la lentille à gradient d'indice utilisée côté multiplexage pour la liaison bidirectionnelle à trois canaux;

— la figure 6 représente une vue en coupe longitudinale du multiplexeur pour une liaison bidirectionnelle à cinq canaux dont quatre d'aller et un de retour; et

— la figure 7 représente une vue en coupe longitudinale du multiplexeur pour une liaison bidirectionnelle à six canaux dont quatre d'aller et deux de retour.

Sur ces différentes figures, les mêmes références se rapportent aux mêmes éléments.

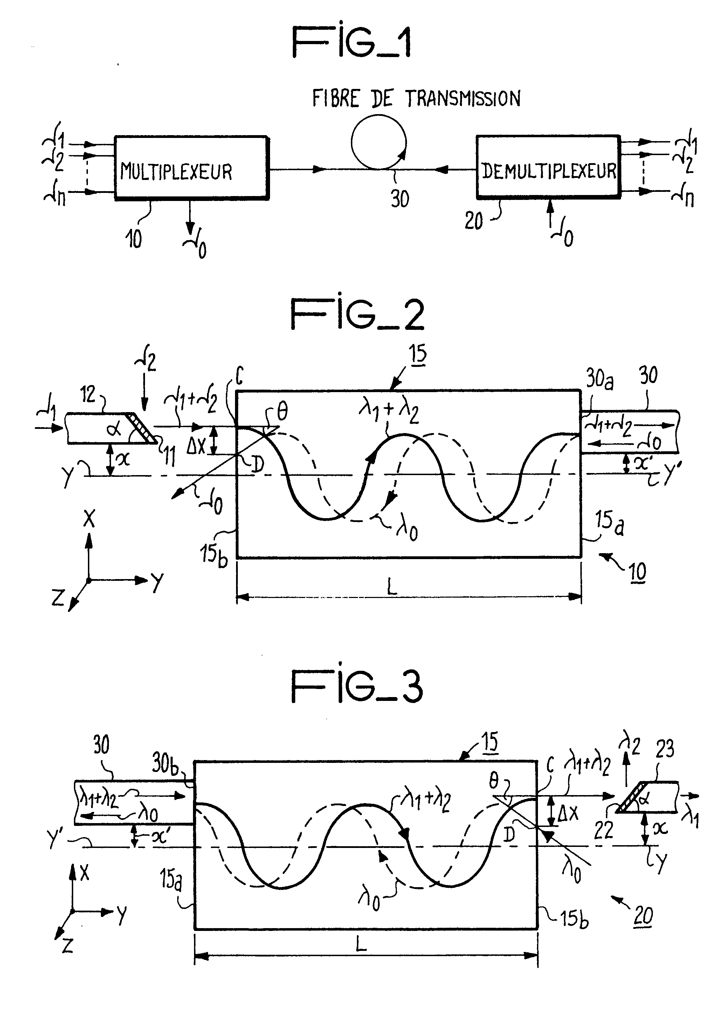

Sur la figure 1, on a représenté en 10 un multiplexeur de n longueurs d'onde différentes $\lambda_1 \lambda_2 \dots \lambda_n$ et en 20 le démultiplexeur associé, par exemple pour un système de télédistribution sur une seule fibre optique principale 30 dite de liaison ou de transmission.

La liaison optique est dite bidirectionnelle lorsque la fibre optique 30 transmet:

— dans un sens, du multiplexeur 10 vers le démultiplexeur 20, les signaux lumineux aux n longueurs d'onde $\lambda_1 \lambda_2 \dots \lambda_n$ émises par des diodes photoémettrices, telles que par exemple des diodes laser ou des diodes électroluminescentes (non représentées) et reçues par des diodes photodétectrices, telles que par exemple des photodiodes à avalanche ou des photodiodes du type PIN (non représentées);

— et dans l'autre sens une ou plusieurs longueurs d'ondes dites de retour dont une seule a été représentée en $\lambda_0$ sur la figure 1, celle-ci étant émise par une diode photoémettrice (non représentée) couplée au démultiplexeur 20 et reçue par une diode photodétectrice (non représentée) couplée au multiplexeur 10.

Ainsi, par exemple pour un système de télédistribution, le dispositif de multiplexage-démultiplexage tel que représenté sur la figure 1 est bidirectionnel à $(n+1)$ canaux ou voies de transmission, c'est-à-dire à n canaux aller pour la transmission des signaux vidéo aux longueurs d'onde $\lambda_1, \lambda_2 \dots \lambda_n$ et à un seul canal retour pour la transmission d'un signal supplémentaire, tel que par exemple un signal de télécommande, à la longueur d'onde $\lambda_0$.

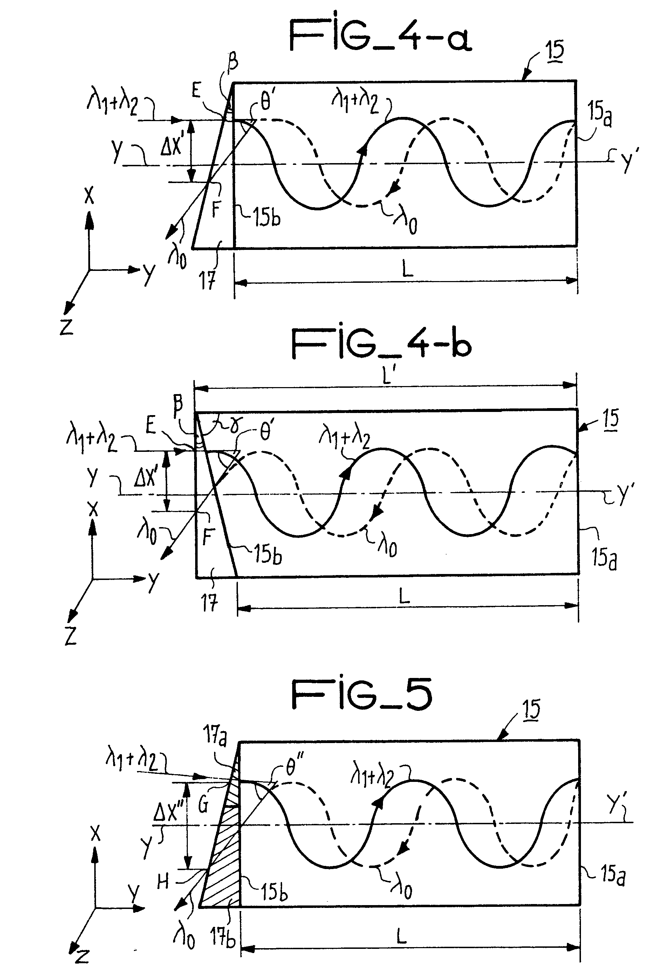

Les figures 2 et 3 représentent respectivement le multiplexeur 10 et le démultiplexeur associé 20 selon l'invention pour une liaison optique bidirectionnelle par exemple à trois canaux dont deux d'aller et un de retour. Les deux longueurs d'onde d'aller différentes $\lambda_1$ et $\lambda_2$ sont égales respectivement par exemple à 0,86 micron et à 1,3 microns, tandis que la longueur d'onde de retour $\lambda_0$ différente des deux autres est égale par exemple à 0,78 micron.

Le multiplexeur optique 10 représenté sur la figure 2 comporte tout d'abord des moyens optiques filtrants pour le multiplexage proprement dit des deux longueurs d'onde d'aller $\lambda_1$ et $\lambda_2$, constitués par exemple par un filtre interférentiel 11 multicouche diélectrique déposé sur la face de sortie biseautée sous un angle $\alpha$ donné, par exemple de l'ordre de 45°, et polie d'une fibre optique intermédiaire 12 multimode à saut d'indice ou à gradient d'indice, telle que par exemple une fibre 50/125 microns.

La fibre intermédiaire 12 transmet par exemple le signal optique à la première longueur d'onde d'aller $\lambda_1$, tandis que le signal optique à la seconde longueur d'onde d'aller $\lambda_2$ est par exemple directement injecté sur le filtre. Ainsi, le filtre interférentiel 11 est conçu de façon à opérer en transmission pour la longueur d'onde $\lambda_1$ après propagation dans la fibre et en réflexion pour la longueur d'onde $\lambda_2$, de sorte que le filtre produit le multiplexage des deux longueurs d'onde d'aller $\lambda_1$ et $\lambda_2$ par répartition en longueur d'onde et génère en sortie un signal optique aux deux longueurs d'onde d'aller multiplexées $\lambda_1 + \lambda_2$.

Comme il apparaît sur la figure 2, la fibre optique de liaison 30 est bidirectionnelle, c'est-à-dire qu'elle transmet dans un sens les deux longueurs d'onde d'aller multiplexées $\lambda_1 + \lambda_2$, et dans l'autre sens la longueur d'onde de retour $\lambda_0$. La fibre optique 30 présente une face 30a servant à la fois de face d'entrée pour le signal optique aux deux longueurs d'onde d'aller multiplexées $\lambda_1 + \lambda_2$, et de face de sortie pour le signal optique à la longueur d'onde de retour $\lambda_0$ après propagation dans la fibre 30. Cette dernière est une fibre multimode à saut d'indice ou à gradient d'indice, telle que par exemple une fibre 100/140 microns pour laquelle l'ouverture numérique est de l'ordre de 0,25 à 0,29.

Le multiplexeur 10 comporte de plus une lentille autofocalisatrice 15 se présentant sous forme d'un barreau cylindrique d'axe longitudinal YY', réalisé en un matériau réfringent à gradient d'indice, tel que par exemple du verre, et limité par deux faces planes et polies 15a et 15b.

Comme cela est connu, le matériau réfringent à gradient d'indice d'une lentille autofocalisatrice présente un indice optique de réfraction qui a une distribution parabolique le long d'un axe radial passant par un maximum au centre du barreau. Un rayon lumineux moyen entrant par une des faces planes, sous un angle d'incidence inférieur à l'angle d'acceptance maximum, se propage à l'intérieur du barreau suivant un chemin sinusoïdal du fait de la variation d'indice.

Ce type de lentille présente de nombreux avantages. Parmi ceux-ci, il est notamment possible d'obtenir aisément des lentilles à très courte distance focale, de petit diamètre, et surtout la distance focale est simplement déterminée par la longueur du barreau.

En effet, on peut définir une période, appelée couramment «pitch» selon la terminologie anglo-saxonne, qui correspond à la période de la fonction sinusoïdale. Cette période dépend notamment du matériau constituant la lentille et de l'évolution précise de l'indice de réfraction le long d'un axe radial. Elle peut être obtenue à partir de tables ou par le calcul. Une telle lentille est proposée comme composant normalisé dans le commerce, notamment sous la marque déposée SELFOC.

De plus, ce type de lentille possède une propriété physique très particulière définie par ce qu'on appelle couramment des aberrations chromatiques. En effet, une telle lentille présente une variation de son indice optique de réfraction vis-à-vis de chaque longueur d'onde. Ainsi, des rayons lumineux moyens de différentes longueurs d'onde qui se propagent sous une forme sinusoïdale dans la lentille ont des périodes différentes, de sorte que ces différents rayons lumineux sont déphasés. Par conséquent, on obtient un décalage ou découplage spatial des différentes longueurs d'onde, qui est défini en fonction de la longueur de la lentille.

C'est sur la recherche d'un décalage spatial maximal dû à la dispersion chromatique d'une lentille autofocalisatrice qu'est fondée l'invention pour permettre de découpler au maximum la longueur d'onde de retour des longueurs d'onde d'aller.

Ainsi, sur la figure 2, la lentille 15 de diamètre de l'ordre de 1 à 2 millimètres est coupée normalement à son axe YY' à une longueur L, par exemple égale à 60 mm, déterminée expérimentalement ou par calculs de telle sorte que l'écart spatial entre la direction de propagation du signal optique moyen aux deux longueurs d'onde d'aller multiplexées $\lambda_1 + \lambda_2$ pénétrant par la face 15b de la lentille et la direction de propagation du signal optique moyen à la longueur d'onde de retour $\lambda_0$ sortant par cette même face 15b après propagation dans la lentille soit maximal. Cet écart spatial est défini au niveau de la face 15b de la lentille d'une part par la distance $\Delta X$ entre les deux rayons lumineux moyens ($\lambda_1 + \lambda_2$ et $\lambda_0$) et d'autre part par l'angle $\theta$ entre ces deux mêmes rayons lumineux moyens, $\theta$ étant l'écart angulaire entre les pentes des deux ondes lumineuses sinusoïdales à l'intérieur de la lentille. On obtient donc au niveau de la face 15b de la lentille un maximum de séparation entre les longueurs d'onde d'aller multiplexées et la longueur d'onde de retour, de sorte que cette longueur d'onde de retour $\lambda_0$ est totalement découplée des deux longueurs d'onde d'aller multiplexées $\lambda_1 + \lambda_2$.

Par conséquent, la lentille autofocalisatrice 15 assure l'extraction de la longueur d'onde de retour $\lambda_0$ indépendamment du filtre interférentiel 11 en découplant au maximum celle-ci des longueurs d'onde d'aller $\lambda_1$ et $\lambda_2$ grâce au décalage spatial dû à la dispersion chromatique de la lentille.

On notera que la fibre intermédiaire 12 est disposée sensiblement parallèlement à l'axe YY' de la lentille autofocalisatrice 15 et à une distance x de celui-ci de façon à faire pénétrer le signal optique moyen aux deux longueurs d'onde d'aller multiplexées dans la lentille pour l'obtention de l'écart vertical maximal $\Delta X$ défini par la distance CD, C étant le point d'entrée du signal optique moyen aux deux longueurs d'onde d'aller multiplexées $\lambda_1 + \lambda_2$ et D étant le point de sortie du signal optique moyen à la longueur d'onde de retour $\lambda_0$ après propagation dans la lentille.

En outre, la fibre de liaison 30 est positionnée, par exemple par collage, par rapport à la face 15a de la lentille autofocalisatrice 15 et à une distance x' de l'axe YY' de la lentille de telle sorte que le signal optique aux deux longueurs d'onde d'aller multiplexées pénètre dans la fibre après propagation dans la lentille 15 et que le signal optique à la longueur d'onde de retour transmis par la fibre se propage dans la lentille dont la longueur est telle que l'écart spatial défini par les paramètres $\Delta X$ et $\theta$ soit le plus grand possible.

Sur la figure 3, on a représenté en 20 le démultiplexeur associé au multiplexeur 10 de la figure 2 et qui est conçu d'une façon tout à fait semblable à celui-ci décrit en référence à la figure 2.

Plus précisément, sur la figure 3, la fibre optique de liaison 30 présente une face 30b servant à la fois de face de sortie pour le signal optique aux deux longueurs d'onde d'aller multiplexées $\lambda_1 + \lambda_2$ après propagation dans la fibre, et de face d'entrée pour le signal optique à la longueur d'onde de retour $\lambda_0$.

La lentille autofocalisatrice 15 est disposée entre la face 30b de sortie-entrée de la fibre 30 et un filtre interférentiel 22 porté par une fibre optique intermédiaire 23 de même type que celle repérée en 12 sur la figure 2. Le filtre interférentiel 22 reçoit donc le signal optique moyen aux deux longueurs d'onde d'aller multiplexées $\lambda_1 + \lambda_2$, et est conçu de façon à opérer en transmission pour la longueur d'onde $\lambda_1$ qui se propage ensuite dans la fibre 23 et en réflexion pour la longueur d'onde $\lambda_2$, produisant ainsi par sélection le démultiplexage des deux longueurs d'onde d'aller $\lambda_1$ et $\lambda_2$.

Comme précédemment, la lentille 15 a une longueur donnée L telle que l'écart spatial défini par les paramètres $\Delta X$ et $\theta$ soit maximal, C étant dans ce cas le point de sortie du signal optique moyen aux deux longueurs d'onde d'aller multiplexées $\lambda_1 + \lambda_2$ après propagation dans la lentille et D étant le point d'entrée du signal optique moyen à la longueur d'onde de retour $\lambda_0$ injecté directement sous un angle d'incidence donné au niveau de la face 15b de la lentille, de façon à obtenir ledit écart spatial maximal.

Par conséquent, la lentille autofocalisatrice 15 assure la transmission de la longueur d'onde de retour $\lambda_0$ indépendamment du filtre interférentiel 22 en découplant celle-ci des longueurs d'onde d'aller $\lambda_1$ et $\lambda_2$ grâce au décalage spatial maximal dû à la dispersion chromatique de la lentille.

La figure 4a représente une variante préférée de la lentille autofocalisatrice 15 utilisée dans le cadre du multiplexeur 10 illustré sur la figure 2. La lentille 15 comporte sur sa face plane et polie 15b, c'est-à-dire celle par laquelle pénètre le signal optique aux deux longueurs d'onde d'aller multiplexées $\lambda_1 + \lambda_2$ et sort le signal optique à la longueur d'onde de retour $\lambda_0$ après propagation dans la lentille, un micro-prisme 17 ayant pour section droite un triangle rectangle d'angle au sommet $\beta$ donné, par exemple de l'ordre de 10°, formé entre l'hypoténuse et le grand côté du triangle. Ce prisme 17 présente un indice homogène donné et est rapporté, par exemple par collage, sur toute la hauteur de la face 15b de la lentille de longueur L définie comme étant la longueur pour laquelle il y a une séparation maximale des deux ondes lumineuses sinusoïdales.

La présence de ce micro-prisme 17 constitue un perfectionnement à la lentille 15 en ce sens qu'il permet d'accentuer l'écart spatial entre la direction de propagation du signal optique moyen aux deux longueurs d'onde d'aller multiplexées $\lambda_1 +$

$\lambda_2$ et celle du signal optique moyen à la longueur d'onde de retour $\lambda_0$. On a représenté en $\Delta X'$ et $\theta'$ les paramètres du nouvel écart spatial au niveau de la face oblique en section droite du prisme, permettant ainsi d'obtenir un découplage aussi parfait que possible entre la longueur d'onde de retour et les longueurs d'onde d'aller. On notera que $\Delta X'$ et $\theta'$ sont définis comme précédemment, $\Delta X'$ représentant la distance EF où E est le point d'entrée du signal optique moyen aux deux longueurs d'onde d'aller multiplexées $\lambda_1 + \lambda_2$ et où F est le point de sortie du signal optique moyen à la longueur d'onde de retour $\lambda_0$ après propagation dans la lentille.

Le positionnement du micro-prisme 17 sur la lentille autofocalisatrice 15 peut être réalisé d'une autre façon, comme représenté sur la figure 4b. Ainsi, la lentille 15 de longueur L' supérieure à L est biseautée à son extrémité sous un angle $\gamma$ donné, de l'ordre de 80°, puis polie, de telle sorte qu'il y ait une séparation maximale des deux ondes lumineuses sinusoïdales pour la longueur donnée L au niveau de la face biseautée 15b de la lentille. Le prisme 17 d'angle au sommet $\beta$ de l'ordre de 10° est ensuite accolé sur la face biseautée 15b de la lentille, de sorte que le nouvel écart spatial défini par ses paramètres $\Delta X'$ et $\theta'$ permet, comme à propos de la figure 4a, de découpler le plus possible la longueur d'onde de retour des longueurs d'onde d'aller.

Le prisme 17 représenté sur les figures 4a et 4b présente un indice de réfraction donné et homogène, c'est-à-dire constant, avec lequel est obtenu l'écart spatial défini par les paramètres $\Delta X'$ et $\theta'$.

Selon une autre variante représentée sur la figure 5 qui reprend le prisme 17 tel qu'illustré sur la figure 4a, celui-ci est réalisé en deux parties et présente un indice de réfraction non homogène: une première partie de prisme 17a d'indice donné n reçoit uniquement le signal optique aux deux longueurs d'onde d'aller multiplexées $\lambda_1 + \lambda_2$, et une seconde partie de prisme 17b d'indice donné n' différent de n reçoit uniquement le signal optique à la longueur d'onde de retour $\lambda_0$. Ce prisme d'indice non homogène permet d'accentuer encore davantage l'écart spatial entre la direction de propagation du signal optique moyen aux deux longueurs d'onde d'aller multiplexées $\lambda_1$ et $\lambda_2$ et celle du signal optique moyen à la longueur d'onde de retour $\lambda_0$, assurant ainsi un découplage parfait entre la longueur d'onde de retour et les longueurs d'onde d'aller. On a représenté en $\Delta X''$ et $\theta''$ les paramètres définis comme précédemment du nouvel écart spatial, $\Delta X''$ étant la distance GH où G est le point d'entrée du signal optique moyen au deux longueurs d'onde d'aller multiplexées $\lambda_1 + \lambda_2$ et où H est le point de sortie du signal optique moyen à la longueur d'onde de retour $\lambda_0$.

Bien entendu, ce prisme d'indice non homogène peut également être mis en œuvre avec le mode de réalisation représenté sur la figure 4b.

Les figures 4a, 4b et 5 ont été décrites ci-dessus dans le cadre du multiplexeur (figure 2), mais restent bien sûr entièrement valables dans le cadre du démultiplexeur 20 illustré sur la figure 3, en inversant simplement le sens des flèches de $\lambda_0$ et de $\lambda_1 + \lambda_2$.

On notera que le multiplexeur-démultiplexeur optique bidirectionnel à trois canaux décrit ci-dessus pourrait également être mis en œuvre pour une liaison bidirectionnelle généralisée à plus de trois canaux.

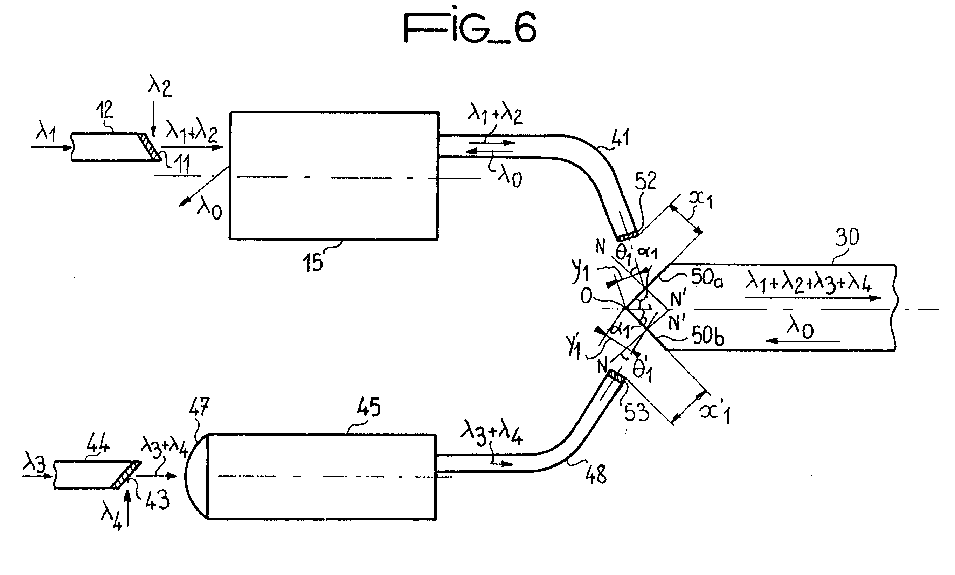

Ainsi, par exemple, pour une liaison bidirectionnelle à cinq canaux dont quatre d'aller et un de retour, le multiplexeur représenté schématiquement sur la figure 6 comporte un premier ensemble défini par le filtre interférentiel 11 pour le multiplexage des deux premières longueurs d'onde d'aller $\lambda_1$ et $\lambda_2$, la lentille autofocalisatrice 15 assurant le découplage entre les longueurs d'onde d'aller multiplexées $\lambda_1 + \lambda_2$ et la longueur d'onde de retour $\lambda_0$ comme décrit précédemment, et une fibre intermédiaire dite de jonction bidirectionnelle 41 du type multimode à saut d'indice ou à gradient d'indice transmettant les longueurs d'onde d'aller multiplexées $\lambda_1 + \lambda_2$ et la longueur d'onde de retour $\lambda_0$.

Le second ensemble du multiplexeur comporte un filtre interférentiel 43 déposé sur une fibre optique 44 et conçu pour multiplexer les deux autres longueurs d'onde d'aller $\lambda_3$ et $\lambda_4$ d'une façon analogue au filtre 11, une lentille autofocalisatrice 45 d'axe longitudinal confondu avec l'axe optique de la fibre 44 et couplée optiquement à celle-ci par une micro-lentille 47 pour optimiser le couplage de l'énergie lumineuse, et une fibre intermédiaire dite de jonction unidirectionnelle 48 transmettant les longueurs d'onde d'aller multiplexées $\lambda_3 + \lambda_4$ après propagation dans la lentille 45.

Comme il apparaît sur la figure 6, les deux fibres de jonction 41 et 48 sont couplées à la fibre de liaison 30 dont une extrémité est biseautée en forme de toit, comme cela est décrit dans la demande de brevet fançais déposée le 10 mai 1983 sous le n° 83 07 795 au nom de la Demanderesse, concernant: «Dispositif de multiplexage et de démultiplexage de longueurs d'onde par fibres optiques». La fibre de liaison 30 est biseautée en deux parties 50a et 50b formant chacune un angle saillant $\alpha_1$ donné, par exemple égal à 60°. Cet angle $\alpha_1$ est choisi de façon à augmenter la valeur de l'angle d'acceptance de la fibre multimode 30.

Les deux fibres de jonction 41 et 48 sont couplées respectivement aux deux parties biseautées 50a et 50b de la fibre de liaison 30, de telle sorte que le maximum d'énergie lumineuse à chaque longueur d'onde soit injecté dans la fibre. Ainsi, pour obtenir ce couplage maximum, on positionne chaque fibre de jonction en un point de l'espace défini expérimentalement par un angle $\theta_1$ (ou $\theta_1'$) formé par l'axe longitudinal de la fibre de jonction avec la normale NN' de la face biseautée, par la distance $x_1$ (ou $x_1'$) entre la fibre de jonction et la face biseautée, et par la distance $y_1$ (ou $y_1'$) entre la fibre de jonction et le point O extrémité de la face biseautée.

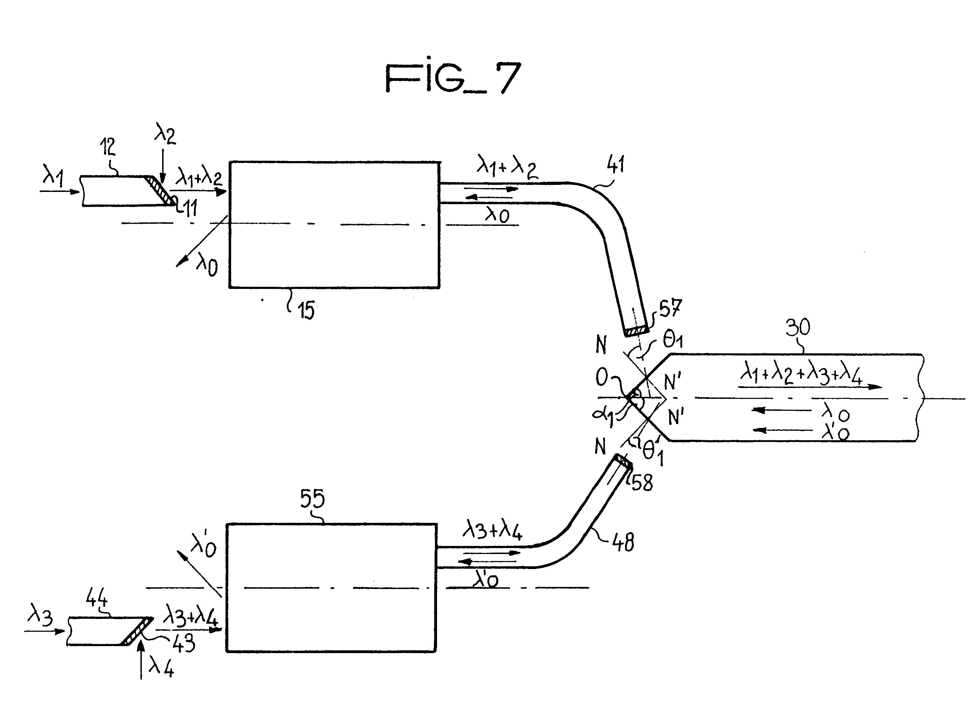

Sur la figure 6 comme sur la figure 7, on a volontairement exagéré le positionnement des fibres de jonction par rapport aux faces biseautées de la fibre de liaison, dans un souci de clarté.

La fibre de jonction 41 porte un filtre interférentiel multicouche diélectrique 52 conçu de façon à opérer en transmission à la fois pour les longueurs d'onde d'aller multiplexées $\lambda_1 + \lambda_2$ et pour la longueur d'onde de retour $\lambda_0$, et en réflexion uniquement pour les autres longueurs d'onde d'aller multiplexées $\lambda_3 + \lambda_4$.

De même, la fibre de jonction 48 porte un filtre interférentiel 53 conçu de façon à opérer en transmission uniquement pour les longueurs d'onde d'aller multiplexées $\lambda_3 + \lambda_4$ et en réflexion pour les autres longueurs d'onde d'aller multiplexées $\lambda_1 + \lambda_2$ et pour la longueur d'onde de retour $\lambda_0$.

Les signaux optiques aux longueurs d'onde d'aller multiplexées $\lambda_1 + \lambda_2$ et $\lambda_3 + \lambda_4$ transmis par les deux fibres de jonction 41 et 48 pénètrent donc, après passage par les deux filtres interférentiels 52 et 53 opérant en transmission, dans la fibre de liaison 30 par ses deux parties biseautées, ce qui produit le multiplexage des longueurs d'onde d'aller $\lambda_1 + \lambda_2 + \lambda_3 + \lambda_4$ dans la fibre de liaison 30, tandis que la longueur d'onde de retour $\lambda_0$ est reçue, après sélection par le filtre interférentiel 52, par la fibre de jonction bidirectionnelle 41.

Le démultiplexeur associé à ce multiplexeur bidirectionnel à cinq canaux est réalisé d'une façon tout à fait similaire en apportant les modifications appropriées à la portée de l'homme du métier.

A titre d'autre exemple représenté sur la figure 7, pour une liaison bidirectionnelle à six canaux dont quatre d'aller et deux de retour, le multiplexeur comporte un premier ensemble défini par le filtre interférentiel 11 pour le multiplexage des deux premières longueurs d'onde d'aller $\lambda_1$ et $\lambda_2$, la lentille autofocalisatrice 15 assurant le découplage entre les longueurs d'onde d'aller multiplexées $\lambda_1 + \lambda_2$ et la première longueur d'onde de retour $\lambda_0$, et la fibre de jonction bidirectionnelle 41 transmettant les longueurs d'onde d'aller multiplexées $\lambda_1 + \lambda_2$ et la longueur d'onde de retour $\lambda_0$.

Le second ensemble du multiplexeur comporte le filtre interférentiel 43 pour multiplexer les deux autres longueurs d'onde d'aller $\lambda_3$ et $\lambda_4$, une lentille autofocalisatrice 55 de même type que celle repérée en 15 et assurant le découplage entre les longueurs d'onde d'aller multiplexées $\lambda_3$ et $\lambda_4$ et la seconde longueur d'onde de retour $\lambda_0'$, et la fibre de jonction bidirectionnelle 48 transmettant les longueurs d'onde d'aller multiplexées $\lambda_3 + \lambda_4$ et la longueur d'onde de retour $\lambda_0'$.

Les deux fibres de jonction 41 et 48 sont couplées à la fibre de liaison 30 d'une façon analogue à celle décrite en référence à la figure 6, et deux filtres interférentiels 57 et 58 sont déposés sur l'extrémité des fibres de jonction 41 et 48. Plus précisément, le filtre interférentiel 57 est conçu de façon à opérer en transmission à la fois pour les longueurs d'onde d'aller multiplexées $\lambda_1 + \lambda_2$ et pour la longueur d'onde de retour $\lambda_0$, et en réflexion pour les autres longueurs d'onde d'aller multiplexées $\lambda_3 + \lambda_4$ et pour l'autre longueur d'onde de retour $\lambda_0'$, tandis que le filtre interférentiel 58 est conçu d'une façon inversée.

Ainsi, les signaux optiques aux longueurs d'onde d'aller multiplexées $\lambda_1 + \lambda_2$ et $\lambda_3 + \lambda_4$ transmis par les deux fibres de jonction 41 et 48 pénètrent, après passage par les deux filtres interférentiels 57 et 58 opérant en transmission, dans la fibre de liaison 30 où se produit le multiplexage des longueurs d'onde d'aller $\lambda_1 + \lambda_2 + \lambda_3 + \lambda_4$, tandis que les deux longueurs d'onde de retour $\lambda_0$ et $\lambda_0'$ sont reçues respectivement, après sélection par les filtres interférentiels 57 et 58, par les deux fibres de jonction bidirectionnelles 41 et 48.

Le démultiplexeur associé à ce multiplexeur bidirectionnel à six canaux est également réalisé d'une façon analogue en apportant les modifications appropriées à la portée de l'homme du métier.

## Revendications

1. Multiplexeur de longueurs d'onde pour liaison bidirectionnelle, comportant une fibre optique de liaison (30) destinée à transmettre dans un sens un signal optique d'au moins deux longueurs d'onde multiplexées ($\lambda_1$, $\lambda_2$) dites d'aller et transmettant dans l'autre sens un signal optique d'au moins une longueur d'onde ($\lambda_0$) dite de retour, la fibre de liaison ayant une face (30a) servant à la fois de face d'entrée pour les longueurs d'onde d'aller et de face de sortie pour la longueur d'onde de retour, et des moyens optiques filtrants (11) pour multiplexer les longueurs d'onde d'aller, caractérisé en ce que le multiplexeur (10) comporte une lentille autofocalisatrice (15) disposée entre la face d'entrée-sortie de la fibre et la sortie des moyens optiques filtrants, se présentant sous forme d'un barreau cylindrique de longueur donnée (L) en matériau réfringent à gradient d'indice et limité par deux faces, et en ce que la longueur de la lentille est telle que l'écart spatial ($\Delta X$, $\theta$) entre la direction de propagation du signal optique aux longueurs d'onde d'aller multiplexées ($\lambda_1 + \lambda_2$) pénétrant par l'une (15b) des faces de la lentille et celle du signal optique à la longueur d'onde de retour ($\lambda_0$) sortant par cette même face après propagation dans la lentille soit maximal, permettant ainsi de découpler la longueur d'onde de retour ($\lambda_0$) des longueurs d'onde d'aller ($\lambda_1$, $\lambda_2$), la fibre de liaison (30) étant positionnée par rapport à l'autre face (15a) de la lentille de telle sorte que le signal optique aux longueurs d'onde d'aller multiplexées pénètre dans la fibre après propagation dans la lentille.

2. Multiplexeur selon la revendication 1, caractérisé en ce que chacune des deux faces (15a, 15b) de la lentille autofocalisatrice (15) est plane et polie.

3. Multiplexeur selon la revendication 2, caractérisé en ce que la lentille autofocalisatrice (15) de longueur donnée comporte, sur sa face (15b) par laquelle pénètre le signal optique aux longueurs d'onde d'aller multiplexées et sort le signal optique à la longueur d'onde de retour après propagation dans la lentille, un prisme (17) ayant pour section droite un triangle rectangle dont l'hypoténuse forme un angle donné avec le côté du triangle rapporté sur toute ladite face (15b) de la lentille, chaque signal optique traversant le prisme, permettant ainsi d'obtenir un écart spatial maximal entre la direction de propagation du signal optique aux longueurs d'onde d'aller multiplexées pénétrant dans le prisme et celle du signal optique à la longueur d'onde de retour sortant du prisme après propagation dans la lentille.

4. Multiplexeur selon la revendication 1, caractérisé en ce que la face (15a) de la lentille autofocalisatrice (15) par laquelle sort le signal optique aux longueurs d'onde d'aller multiplexées après propagation dans la lentille et pénètre le signal optique à la longueur d'onde de retour est plane, en ce que l'autre face (15b) de la lentille est biseautée sous un angle donné, et en ce que la lentille (15) comporte un prisme (17) ayant pour section droite un triangle rectangle dont l'hypoténuse est rapportée sur toute ladite face biseautée (15b) de la lentille, chaque signal optique traversant le prisme, permettant ainsi d'obtenir un écart spatial maximal entre la direction de propagation du signal optique aux longueurs d'onde d'aller multiplexées pénétrant dans le prisme et celle du signal optique à la longueur d'onde de retour sortant du prisme après propagation dans la lentille.

5. Multiplexeur selon l'une des revendications 3 ou 4, caractérisé en ce que le prisme (17) présente un indice de réfraction donné constant.

6. Multiplexeur selon l'une des revendications 3 ou 4, caractérisé en ce que le prisme comporte une première partie (17a) d'indice de réfraction donné dans laquelle pénètre le signal optique aux longueurs d'onde d'aller multiplexées, et une seconde partie (17b) d'indice de réfraction donné différent de celui de la première partie et par laquelle sort le signal optique à la longueur d'onde de retour après propagation dans la lentille (15).

7. Multiplexeur selon l'une des revendications précédentes, caractérisé en ce que les moyens optiques filtrants comportent un filtre interférentiel (11) déposé sur la face de sortie biseautée sous un angle donné d'une fibre optique intermédiaire (12), le filtre recevant les longueurs d'onde d'aller ($\lambda_1 + \lambda_2$) dont au moins l'une d'elles est transmise par la fibre intermédiaire et multiplexant ces longueurs d'onde d'aller sous forme d'un signal optique pénétrant par l'une des faces de la lentille.

8. Démultiplexeur de longueurs d'onde pour liaison bidirectionnelle, comportant une fibre optique de liaison (30) transmettant dans un sens un signal optique d'au moins deux longueurs d'onde ($\lambda_1, \lambda_2$) multiplexées dites d'aller et destinée à transmettre dans l'autre sens un signal optique d'au moins une longueur d'onde ($\lambda_0$) dite de retour, la fibre de liaison ayant une face (30b) servant à la fois de face de sortie pour les longueurs d'onde d'aller et de face d'entrée pour la longueur d'onde de retour, et des moyens optiques filtrants (22) pour démultiplexer les longueurs d'onde d'aller transmises par la fibre, caractérisé en ce que le démultiplexeur (20) comporte une lentille autofocalisatrice (15) disposée entre la face de sortie-entrée de la fibre et l'entrée des moyens optiques filtrants, se présentant sous forme d'un barreau cylindrique de longueur donnée (L) en matériau réfringent à gradient d'indice et limité par deux faces, et en ce que la longueur de la lentille est telle que l'écart spatial ($\Delta X, \theta$) entre la direction de propagation du signal optique aux longueurs d'onde d'aller multiplexées ($\lambda_1 + \lambda_2$) sortant par l'une (15b) des faces de la lentille après propagation dans celle-ci et celle du signal optique à la longueur d'onde de retour ($\lambda_0$) pénétrant par cette même face soit maximal, permettant ainsi de découpler la longueur d'onde de retour ($\lambda_0$) des longueurs d'onde d'aller ($\lambda_1, \lambda_2$), la fibre de liaison (30) étant positionnée par rapport à l'autre face (15a) de la lentille de telle sorte que le signal optique à la longueur d'onde de retour pénètre dans la fibre après propagation dans la lentille.

9. Démultiplexeur selon la revendication 8, caractérisé en ce que chacune des deux faces (15a, 15b) de la lentille autofocalisatrice (15) est plane et polie.

10. Démultiplexeur selon la revendication 9, caractérisé en ce que la lentille autofocalisatrice (15) de longueur donnée comporte, sur sa face (15b) par laquelle sort le signal optique aux longueurs d'onde d'aller multiplexées après propagation dans la lentille et pénètre le signal optique à la longueur d'onde de retour, un prisme (17) ayant pour section droite un triangle rectangle dont l'hypoténuse forme un angle donné avec le côté du triangle rapporté sur toute ladite face (15b) de la lentille, chaque signal optique traversant le prisme, permettant ainsi d'obtenir un écart spatial maximal entre la direction de propagation du signal optique aux longueurs d'onde d'aller multiplexées sortant du prisme après propagation dans la lentille et celle du signal optique à la longueur d'onde de retour pénétrant dans le prisme.

11. Démultiplexeur selon la revendication 8, caractérisé en ce que la face (15a) de la lentille autofocalisatrice (15) par laquelle pénètre le signal optique aux longueurs d'onde d'aller multiplexées et sort le signal optique à la longueur d'onde de retour après propagation dans la lentille est plane, en ce que l'autre face (15b) de la lentille est biseautée sous un angle donné, et en ce que la lentille (15) comporte un prisme (17) ayant pour section droite un triangle rectangle dont l'hypoténuse est rapportée sur toute ladite face biseautée (15b) de la lentille, chaque signal optique traversant le prisme, permettant ainsi d'obtenir un écart spatial maximal entre la direction de propagation du signal optique aux longueurs d'onde d'aller multiplexées sortant du prisme après propagation dans la lentille et celle du signal optique à la longueur d'onde de retour pénétrant dans le prisme.

12. Démultiplexeur selon l'une des revendications 10 ou 11, caractérisé en ce que le prisme (17) présente un indice de réfraction donné constant.

13. Démultiplexeur selon l'une des revendications 10 ou 11, caractérisé en ce que le prisme comporte une première partie (17a) d'indice de réfraction donné par laquelle sort le signal optique aux longueurs d'onde d'aller multiplexées après propagation dans la lentille, et une seconde partie (17b) d'indice de réfraction donné différent de celui de la première partie et dans laquelle pénètre le signal optique à la longueur d'onde de retour.

14. Démultiplexeur selon l'une des revendications 8 à 13, caractérisé en ce que les moyens optiques filtrants comportent un filtre interférentiel (22) déposé sur la face d'entrée biseautée sous un angle donné d'une fibre optique intermédiaire (23), le filtre recevant le signal optique aux longueurs d'onde d'aller multiplexées après propagation dans la lentille et démultiplexant ces longueurs d'onde d'aller dont au moins l'une d'elles est reçue par la fibre intermédiaire.

**Claims**

1. A wavelength multiplexer for bidirectional connection, comprising an optical connecting fibre (30) intended for transmission in one direction of an optical signal of at least two multiplexer wavelengths referred to as outgoing wavelengths ($\lambda_1$, $\lambda_2$) and for transmission in the other direction of an optical signal of at least one return wavelength ($\lambda_0$), said connecting fibre having a surface (30a) acting as an input surface for the outgoing wavelengths and as an output surface for the return wavelength, and optical filtering means (11) for multiplexing the outgoing wavelengths, characterized in that the multiplexer comprises a self-focusing lens (15) situated between the input-output surface of the fibre and the output of said optical filtering means, in the form of a cylindrical bar of given length (L) and of a refractive material having an index gradient and delimited by two surfaces, and that the length of said lens is such that the spatial separation ($\Delta X$, $\theta$) between the direction of propagation of the optical signal at the multiplexed outgoing wavelengths ($\lambda_1 + \lambda_2$) penetrating through one of the surfaces (15b) of the lens and that of the optical signal at the return wavelength ($\lambda_0$) outputting through this same surface after propagation in the lens is maximum, thus permitting decoupling the return wavelength ($\lambda_0$) from the outgoing wavelengths ($\lambda_1$, $\lambda_2$), said connecting fibre (30) being so positioned with respect to the other surface (15a) of the lens that the optical signal at the multiplexed outgoing wavelengths penetrates into the fibre after propagation in the lens.

2. A multiplexer according to claim 1, characterized in that each of the two surfaces (15a, 15b) of said self-focusing lens (15) is plane and polished.

3. A multiplexer according to claim 2, characterized in that said self-focusing lens (15) of a given length comprises, on its surface (15b) through which enters the optical signal at the multiplexed outgoing wavelengths and through which emerges the optical signal at the return wavelength after propagation in the lens, a prism (17) having as its cross-section a right-angled triangle of which the hypotenuse subtends a given angle with the side of the triangle affixed throughout the said surface (15b) of the lens, each optical signal, which passes through said prism, thus permitting securing a maximum spatial separation between the direction of propagation of the optical signal at the multiplexed outgoing wavelengths penetrating into the prism and that of the optical signal at the return wavelength emerging from the prism after propagation in the lens.

4. A multiplexer according to claim 1, characterized in that the surface (15a) of said self-focusing lens (15) through which outputs the optical signal at the multiplexed outgoing wavelengths after propagation in the lens and through which enters the optical signal at the return wavelength is plane, that the other surface (15b) of said lens is bevelled at a given angle, and that said lens (15) comprises a prism (17) having as its cross-section a right-angled triangle of which the hypotenuse is affixed throughout the said bevelled surface (15b) of the lens, each optical signal which passes through said prism thus permitting securing a maximum spatial separation between the direction of propagation of the optical signal at the multiplexed outgoing wavelengths penetrating into the prism and that of the optical signal at the return wavelength emerging from the prism after propagation in the lens.

5. A multiplexer according to one of claims 3 or 4, characterized in that said prism (17) has a constant given refractive index.

6. A multiplexer according to one of claims 3 or 4, characterized in that said prism comprises a first part (17a) having a given refractive index into which penetrates the optical signal at the multiplexed outgoing wavelengths, and a second part (17b) having a given refractive index differing from that of the first part and through which emerges the optical signal at the return wavelength after propagation in the lens (15).

7. A multiplexer according to one of the preceding claims, characterized in that said optical filtering means comprise an interference filter (11) deposited on the output surface, bevelled at a given angle, of an intermediate optical fibre (12), the filter receiving the outgoing wavelengths ($\lambda_1$, $\lambda_2$) of which at least one is transmitted by the intermediate fibre, and multiplexing these outgoing wavelengths in the form of an optical signal penetrating through one of the surfaces of the lens.

8. A wavelength demultiplexer for bidirectional connection, comprising an optical connecting fibre (30) transmitting an optical signal of at least two multiplexed outgoing wavelengths ($\lambda_1$, $\lambda_2$) in one direction, and intended to transmit in the other direction an optical signal of at least one return wavelength ($\lambda_0$), said connecting fibre having a surface (30b) acting as an output surface for the outgoing wavelengths and at the same time as an input surface for the return wavelength, and optical filtering means (22) for demultiplexing the outgoing wavelengths transmitted by the fibre, characterized in that the demultiplexer (20) comprises a self-focusing lens (15) situated between the output-input surface of the fibre and the input of said optical filtering means, in the form of cylindrical bar of a given length (L) and of refractive material having an index gradient and delimited by two surfaces, and that the length of said lens is such that the spatial separation ($\Delta X$, $\theta$) between the direction of propagation of the optical signal at the multiplexed outgoing wavelengths ($\lambda_1 + \lambda_2$) emerging through one of the surfaces (15b) of the lens after propagation in the same and that of the optical signal at the return wavelength ($\lambda_0$) penetrating through this same surface is a maximum, thus enabling decoupling the return wavelength ($\lambda_0$) from the outgoing wavelengths ($\lambda_1$, $\lambda_2$), said connecting fibre (30) being positioned with respect to the other surface (15a) of the lens in a manner such that the optical signal at the return wavelength penetrates into the fibre after propagation in the lens.

9. A demultiplexer according to claim 8, characterized in that each of the two surfaces (15a, 15b) of said self-focusing lens (15) is plane and polished.

10. A demultiplexer according to claim 9, characterized in that said self-focusing lens (15) of given length comprises, on its surface (15b) through which emerges the optical signal at the multiplexed outgoing wavelengths after propagation in the lens and through which enters the optical signal at the return wavelength, a prism (17) having as its cross-section a right-angled triangle of which the hypotenuse substends a given angle with the side of the triangle affixed to the entire said surface (15b) of the lens, each optical signal which passes through said prism, thus enabling securing a maximum spatial separation between the direction of propagation of the optical signal at the multiplexed outgoing wavelengths emerging from the prism after propagation in the lens and that of the optical signal at the return wavelength penetrating into the prism.

11. A demultiplexer according to claim 8, characterized in that the surface (15a) of said self-focusing lens (15) through which enters the optical signal at the multiplexed outgoing wavelengths and through which emerges the optical signal at the return wavelength after propagation in the lens is plane, that the other surface (15b) of said lens is bevelled at a given angle, and that said lens (15) comprises a prism (17) having as its cross-section a right-angled triangle of which the hypotenuse is affixed throughout the said bevelled surface (15b) of the lens, each optical signal, which passes through said prism, thus permitting securing a maximum spatial separation between the direction of propagation of the optical signal at the multiplexed outgoing wavelengths emerging from the prism after propagation in the lens and that of the optical signal at the return wavelength penetrating into the prism.

12. A demultiplexer according to one of claims 10 or 11, characterized in that said prism (17) has a constant given refractive index.

13. A demultiplexer according to one of claims 10 or 11, characterized in that said prism comprises a first part (17a) having a given refractive index and through which emerges the optical signal at the multiplexed outgoing wavelengths after propagation in the lens, and a second part (17b) having a given refractive index differing from that of the first part and into which penetrates the optical signal at the return wavelength.

14. A demultiplexer according to one of claims 8 to 13, characterized in that said optical filtering means comprise an interference filter (22) deposited on the input surface bevelled at a given angle of an intermediate optical fibre (23), the filter receiving the optical signal at the multiplexed outgoing wavelengths after propagation in the lens and demultiplexing these wavelengths of which at least one is received by the intermediate fibre.

**Patentansprüche**

1. Wellenlängenmultiplexer für eine bidirektionale Verbindung, mit einer optischen Verbindungsfaser (30), über die ein optisches Signal, bestehend aus mindestens zwei multiplexierten Wellenlängen ($\lambda_1$, $\lambda_2$) in einer ersten Richtung übertragen werden soll und in der Gegenrichtung ein optisches Signal bestehend aus mindestens einer Wellenlänge ($\lambda_0$) übertragen wird, wobei eine Stirnseite (30a) der Verbindungsfaser zugleich als Eingang für die Wellenlängen in der ersten Richtung und als Ausgang für die Wellenlänge in Gegenrichtung dient, und mit optischen Filtermitteln (11), um die Wellenlängen in der ersten Richtung zu multiplexieren, dadurch gekennzeichnet, dass der Multiplexer (10) eine selbstfokussierende Linse (15) aufweist, die zwischen der Eingangs-Ausgangsstirnseite der Faser und dem Ausgang der optischen Filtermittel liegt und in Form eines zylindrischen Stabs einer gegebenen Länge (L) aus einem brechenden Material mit einem Indexgradienten vorliegt, der in zwei Stirnflächen endet, und dass die Länge der Linse so gewählt ist, dass der räumliche Abstand ($\Delta X$, $\theta$) zwischen der Ausbreitungsrichtung des optischen Signals mit den multiplexierten Wellenlängen in der ersten Richtung ($\lambda_1 + \lambda_2$), das durch eine der Stirnseiten (15b) der Linse eindringt, und der Ausbreitungsrichtung des optischen Signals mit der Wellenlänge in Gegenrichtung ($\lambda_0$), das an derselben Stirnseite nach Durchlaufen der Linse austritt, einen grösstmöglichen Wert annimmt, so dass es möglich ist, die Wellenlänge in Gegenrichtung ($\lambda_0$) von den Wellenlängen ($\lambda_1$, $\lambda_2$) der ersten Richtung zu entkoppeln, wobei die Verbindungsfaser (30) gegenüber der anderen Stirnseite (15a) der Linse so angeordnet ist, dass das optische Signal bei den multiplizierten Wellenlängen in der ersten Richtung nach Durchlaufen der Linse in die Faser eindringt.

2. Multiplexer nach Anspruch 1, dadurch gekennzeichnet, dass die beiden Stirnseiten (15a, 15b) der selbstfokussierenden Linse (15) eben und poliert sind.

3. Multiplexer nach Anspruch 2, dadurch gekennzeichnet, dass die selbstfokussierende Linse (15) einer gegebenen Wellenlänge an der Stirnseite (15b) über die das optische Signal mit den multiplexierten Wellenlängen in der ersten Richtung eindringt und das optische Signal mit der Wellenlänge in Gegenrichtung nach Durchlauf der Linse austritt, ein Prisma (17) enthält, dessen Querschnitt ein rechtwinkliges Dreieck mit einer Hypotenuse bildet, die mit der auf der ganzen zugeordneten Stirnseite (15b) der Linse aufliegenden Dreiecksseite einen gegebenen Winkel bildet, wobei jedes optische Signal, das das Prisma durchläuft, einen maximalen räumlichen Abstand zu erzielen erlaubt zwischen der Fortpflanzungsrichtung des optischen Signals mit den multiplexierten Wellenlängen in der ersten Richtung, das in das Prisma eindringt und der Fortpflanzungsrichtung des optischen Signals mit der Wellenlänge in Gegenrichtung, das nach Durchlauf der Linse aus dem Prisma austritt.

4. Multiplexer nach Anspruch 1, dadurch gekennzeichnet, dass die Stirnseite (15a) der selbstfokussierenden Linse (15), durch die das optische Signal mit den multiplexierten Wellenlängen in der ersten Richtung nach Durchlauf der Linse austritt und das optische Signal mit der Wellenlänge in Gegenrichtung eindringt, eine ebene Fläche ist, dass die andere Stirnseite (15b) der Linse unter einem gegebenen Winkel abgeschrägt ist, und dass die Linse (15) ein Prisma (17) mit einem Querschnitt in Form eines rechtwinkligen Dreiecks enthält, dessen Hypotenuse auf die gesamte abgeschrägte Stirnseite (15b) der Linse aufgelegt ist, wobei jedes optische Signal, das das Prisma durchläuft, einen maximalen räumlichen Abstand zu erzielen, erlaubt zwischen der Fortpflanzungsrichtung des optischen Signals mit den multiplexierten Wellenlängen in der ersten Richtung, das in das Prisma eindringt, und der Fortpflanzungsrichtung des optischen Signals bei der Wellenlänge in Gegenrichtung, das nach Durchlauf der Linse aus dem Prisma austritt.

5. Multiplexer nach einem der Ansprüche 3 oder 4, dadurch gekennzeichnet, dass das Prisma (17) einen gegebenen konstanten Brechungsindex besitzt.

6. Multiplexer nach einem der Ansprüche 3 oder 4, dadurch gekennzeichnet, dass das Prisma einen ersten Bereich (17a) mit einem gegebenen Brechungsindex, in den das optische Signal mit den multiplexierten Wellenlängen in der ersten Richtung eindringt, und einen zweiten Bereich (17b) eines gegebenen anderen Brechungsindex als der des ersten Bereichs aufweist, wobei durch diesen zweiten Bereich das optische Signal mit der Wellenlänge in Gegenrichtung nach Durchlaufen der Linse (15) austritt.

7. Multiplexer nach einem der vorhergehenden Ansprüche, dadurch gekennzeichnet, dass die optischen Filtermittel ein Interferenzfilter (11) aufweisen, das auf der unter einem gegebenen Winkel abgeschrägten Ausgangsstirnseite einer optischen Zwischenfaser (12) aufliegt und die Wellenlängen ($\lambda_1$, $\lambda_2$) in der ersten Richtung empfängt, von denen mindestens eine durch die Zwischenfaser übertragen wird, wobei dieses Filter die Wellenlängen in der ersten Richtung in Form eines optischen Signals multiplexiert, das durch eine der Stirnseiten der Linse eindringt.

8. Wellenlängen-Demultiplexer für eine bidirektionale Verbindung, mit einer optischen Verbindungsfaser (30), die in einer Richtung ein optisches Signal bestehend aus mindestens zwei multiplexierten Wellenlängen ($\lambda_1$, $\lambda_2$) in einer ersten Richtung überträgt und zur Übertragung eines mindestens eine Wellenlänge ($\lambda_0$) enthaltenden optischen Signals in der Gegenrichtung bestimmt ist, wobei eine Stirnseite (30b) der Verbindungsfaser sowohl als Ausgangsseite für die Wellenlängen in der ersten Richtung als auch als Eingangsseite für die Wellenlänge in Gegenrichtung dient, und mit optischen Filtermitteln (22), um die Wellenlängen in der ersten Richtung, die durch die Faser übertragen werden, zu demultiplexieren, dadurch gekennzeichnet, dass der Demultiplexer (20) eine selbstfokussierende Linse (15) aufweist, die zwischen der Ausgangs-Eingangsseite der Faser und dem Eingang der optischen Filtermittel liegt und in Form eines zylindrischen Stabs einer gegebenen Länge (L) aus einem brechenden Material mit einem Indexgradienten besteht sowie durch zwei Stirnseiten begrenzt ist, und dass die Länge der Linse so gewählt ist, dass der räumliche Abstand ($\Delta X$, $\theta$) zwischen der Ausbreitungsrichtung des optischen Signals bei den multiplexierten Wellenlängen in der ersten Richtung ($\lambda_1$ + $\lambda_2$) das durch eine der Stirnseiten (15b) der Linse nach deren Durchlaufen austritt, und der Ausbreitungsrichtung des optischen Signals mit der Wellenlänge in Gegenrichtung ($\lambda_0$), das durch dieselbe Stirnseite eintritt, einen Höchstwert annimmt, so dass es möglich ist, die Wellenlänge in Gegenrichtung ($\lambda_0$) von den Wellenlängen in der ersten Richtung ($\lambda_1$, $\lambda_2$) zu entkoppeln, wobei die Verbindungsfaser (30) bezüglich der anderen Stirnseite (15a) der Linse so angeordnet ist, dass das optische Signal bei der Wellenlänge in Gegenrichtung nach Durchlaufen der Linse in die Faser eindringt.

9. Demultiplexer nach Anspruch 8, dadurch gekennzeichnet, dass jede der beiden Stirnseiten (15a, 15b) der selbstfokussierenden Linse (15) eben und poliert ist.

10. Demultiplexer nach Anspruch 9, dadurch gekennzeichnet, dass die selbstfokussierende Linse (15) mit der gegebenen Wellenlänge auf der Stirnseite (15b), durch die das optische Signal mit den multiplexierten Wellenlängen in der ersten Richtung nach Durchlaufen der Linse austritt und das optische Signal bei der Wellenlänge in Gegenrichtung eindringt, ein Prisma (17) mit einem Querschnitt in Form eines rechtwinkligen Dreiecks aufweist, dessen Hypotenuse einen gegebenen Winkel mit der Dreiecksseite bildet, die auf der ganzen Stirnseite (15b) der Linse aufliegt, wobei jedes das Prisma durchquerende optische Signal einen maximalen räumlichen Abstand zu erzielen erlaubt zwischen der Fortpflanzungsrichtung des optischen Signals mit den multiplexierten Wellenlängen in der ersten Richtung, das nach Durchlauf der Linse aus dem Prisma austritt, und der Fortpflanzungsrichtung des optischen Signals mit der Wellenlänge in Gegenrichtung, das in das Prisma eindringt.

11. Demultiplexer nach Anspruch 8, dadurch gekennzeichnet, dass die Stirnseite (15a) der selbstfokussierenden Linse (15), durch die das optische Signal mit den multiplexierten Wellenlängen in der ersten Richtung eindringt und das optische Signal bei der Wellenlänge in Gegenrichtung nach Durchlaufen der Linse austritt, eine ebene Fläche ist, dass die andere Stirnseite (15b) der Linse unter einem gegebenen Winkel abgeschrägt ist und dass die Linse (15) ein Prisma (17) mit einem Querschnitt in Form eines rechtwinkligen Dreiecks besitzt, dessen Hypotenuse auf der ganzen abgeschrägten Stirnseite (15b) der Linse aufliegt, wobei jedes optische Signal, das das Prisma durchläuft, einen maximalen räumlichen Abstand zu erzielen erlaubt zwischen der Fortpflanzungsrichtung des optischen Signals mit den multiplexierten Wellenlängen in der ersten Richtung, das nach Durchlauf der Linse aus dem Prisma austritt, und der Fortpflanzungsrichtung des optischen Signals mit der Wellenlänge in Gegenrichtung, das in das Prisma eindringt.

12. Demultiplexer nach einem der Ansprüche 10 oder 11, dadurch gekennzeichnet, dass das Prisma (17) einen gegebenen konstanten Brechungsindex besitzt.

13. Demultiplexer nach einem der Ansprüche 10 oder 11, dadurch gekennzeichnet, dass das Prisma einen ersten Bereich (17a) mit einem gegebenen Brechungsindex aufweist, durch den das optische Signal mit den multiplexierten Wellenlängen in der ersten Richtung nach Durchlauf der Linse austritt, und einen zweiten Bereich (17b) eines gegebenen anderen Brechungsindex als der des ersten Bereichs aufweist, in den das optische Signal bei der Wellenlänge in Gegenrichtung eindringt.

14. Demultiplexer nach einem der Ansprüche 8 bis 13, dadurch gekennzeichnet, dass die optischen Filtermittel ein Interferenzfilter (22) aufweisen, das auf die unter einem gegebenen Winkel abgeschrägte Eingangsstirnseite einer optischen Zwischenfaser (23) aufgebracht ist, das optische Signal bei den multiplexierten Wellenlängen in der ersten Richtung nach Durchlaufen der Linse empfängt und diese Wellenlängen in der ersten Richtung demultiplexiert, von denen mindestens eine von der Zwischenfaser empfangen wird.

0 138 698

# FIG_1

FIBRE DE TRANSMISSION

$\lambda_1$
$\lambda_2$
$\lambda_n$ → MULTIPLEXEUR → ← → DEMULTIPLEXEUR → $\lambda_1$ $\lambda_2$ $\lambda_n$

10    $\lambda_0$    30    20    $\lambda_0$

# FIG_2

# FIG_3

13

FIG_4-a

FIG_4-b

FIG_5

# FIG_6

# FIG_7

0 138 698